# EUROPEAN PATENT APPLICATION

(11) **EP 4 535 541 A1**
(43) Date of publication of application: **09.04.2025**
(21) Application number: 23851389.9
(22) Date of filing: 21.06.2023
(51) Int. Cl.: H01M 50/446, H01M 50/457, H01M 50/451

(54) **BATTERY SEPARATOR AND BATTERY**

(30) Priority: 12.08.2022 CN 202210968061
(71) Applicant: Zhuhai CosMX Battery Co., Ltd., Zhuhai, Guangdong 519180 (CN)
(72) Inventor: CAO, Xiaodong, Zhuhai, Guangdong 519180 (CN); HE, Fei, Zhuhai, Guangdong 519180 (CN); LI, Suli, Zhuhai, Guangdong 519180 (CN); LI, Junyi, Zhuhai, Guangdong 519180 (CN)
(74) Representative: Murgitroyd & Company
(86) International application number: PCT/CN2023/101693
(87) International publication number: WO 2024/032162

(57) **Abstract**

The present invention relates to a battery separator and a battery. The battery separator includes a substrate, a first coating layer and a second coating layer, and the first coating layer and the second coating layer are arranged opposite to one another on two sides of the substrate; the first coating layer includes first polymer particles and inorganic particles; and the second coating layer includes second polymer particles; Dv10 of the first polymer particles is denoted as A, and Dv50 of the first polymer particles is denoted as B; Dv90 of the inorganic particles is denoted as C; and 0.2 ≤ A/C ≤ 5; and 1 ≤ B/C ≤ 40. The battery separator of the present invention adheres well to an electrode plate in a battery cell, giving the battery cell excellent low-temperature dynamic performance; and designing the battery separator as having a structure with two coating layers simplifies a structure of the battery separator. Meanwhile, the battery containing the battery has excellent safety performance and cycling performance.

## Description

### TECHNICAL FIELD

The present invention relates to the field of battery separator technologies, and specifically relates to a battery separator and a battery.

### BACKGROUND

In recent years, lithium-ion batteries have been widely used in a smartphone, a tablet computer, intelligent wearing, an electric tool, an electric vehicle, and other fields.

Lithium-ion batteries have the characteristics of high energy density, long cycle life, no memory effect and environmental protection, and have been widely used in consumer electronics and power tools as energy storage devices. With increasing application of lithium-ion batteries, use environment and requirements of consumers for lithium-ion batteries are constantly improving. This requires that lithium-ion batteries have high safety while taking high- and low-temperature performance into account. Meanwhile, the costs are required to be continuously reduced. As an important component of the lithium-ion battery, a battery separator determines an interface structure and internal resistance of the battery, and directly affects cycling, capacity and safety of the battery.

Therefore, it is of great significance to develop a battery separator that can improve the cycling, capacity and safety of the battery.

### SUMMARY

The objective of the present invention is to overcome the problems in a conventional technology by providing a battery separator and a battery including the battery separator. The battery separator of the present invention adheres well to an electrode plate in a battery cell, giving the battery cell excellent low-temperature dynamic performance; and designing the battery separator as having a structure with two coating layers simplifies a structure of the battery separator. Meanwhile, the battery containing the battery separator has excellent safety performance and cycling performance.

In order to achieve the above objective, a first aspect of the present invention provides a battery separator, where the battery separator includes a substrate, a first coating layer and a second coating layer, and the first coating layer and the second coating layer are arranged opposite to one another on two sides of the substrate;
the first coating layer includes first polymer particles and inorganic particles;
the second coating layer includes second polymer particles; and
Dv10 of the first polymer particles is denoted as A, and Dv50 of the first polymer particles is denoted as B; and Dv90 of the inorganic particles is denoted as C; where 0.2 ≤ A/C ≤ 5; and 1 ≤ B/C ≤ 40.

The present invention has found that, in the first coating layer, the first polymer particles and the inorganic particles are mixed according to a specific particle size ratio, which not only ensures heat shrinkage resistance of the battery separator, but also ensures adhesion of the battery separator to an electrode plate in a battery cell. The second polymer particles coated with the second coating layer can ensure the adhesion of the battery separator to an electrode plate on the other side in the battery cell, giving the battery cell excellent low-temperature dynamic performance. The battery separator is designed as having a structure with two coating layers, which are the first coating layer and the second coating layer, which simplifies a structure, and is suitable for industrial application.

According to a second aspect of the present invention, a battery is provided, and the battery includes the battery separator according to the first aspect of the present invention.

The battery containing the battery separator according to the first aspect of the present invention has excellent safety performance and cycling performance.

By adopting the technical solutions above, the present invention has the following beneficial effects:
(1) the battery separator of the present invention adheres well to the electrode plate in the battery cell, giving the battery cell excellent low-temperature dynamic performance;
(2) in the battery separator provided by the present invention, designing the battery separator as having the structure with two coating layers simplifies the structure of the battery separator, which is suitable for industrial production; and
(3) the battery provided by the present invention has excellent safety performance and cycling performance.

An endpoint and any value of the ranges disclosed herein are not limited to the exact ranges or values, and these ranges or values shall be understood to include values close to these ranges or values. For a numerical range, one or more new numerical ranges may be obtained in combination with each other between endpoint values of respective ranges, between endpoint values of respective ranges and individual point values, and between individual point values, and these numerical range should be considered as specifically disclosed herein.

### BRIEF DESCRIPTION OF THE DRAWINGS

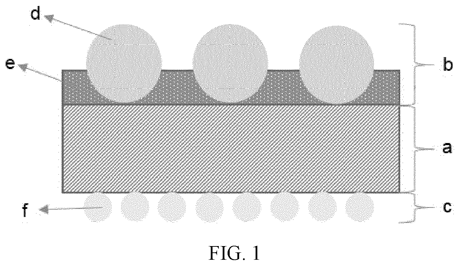

FIG. 1 is a schematic diagram of a structure of a battery according to Embodiment 1 of the present invention.

Reference signs: a refers to substrate; b refers to first coating; c refers to second coating; d refers to first polymer particle; e refers to inorganic particle; and f refers to second polymer particle.

### DETAILED DESCRIPTION OF THE EMBODIMENTS

Specific implementations of the present invention are described below in detail. It should be understood that the specific implementations described herein are merely used for the purposes of illustrating and explaining the present invention, rather than limiting the present invention.

Unless otherwise specified, all scientific and technical terms used in the present invention have the same meaning as commonly understood by those skilled in the art to which the present invention belongs.

A first aspect of the present invention provides a battery separator, where the battery separator includes a substrate, a first coating layer and a second coating layer, and the first coating layer and the second coating layer are arranged opposite to one another on two sides of the substrate;
the first coating layer includes first polymer particles and inorganic particles;
the second coating layer includes second polymer particles; and
Dv10 of the first polymer particles is denoted as A, and Dv50 of the first polymer particles is denoted as B; and Dv90 of the inorganic particles is denoted as C; where A, B and C satisfy a relationship that 0.2 ≤ A/C ≤ 5; and 1 ≤ B/C ≤ 40.

In the present invention, Dv10, Dv50 and Dv90 are used to represent particle sizes corresponding to 10%, 50%, and 90% in particle volume distribution. "Dv10" means that 10% particles have a particle size smaller than Dv10. "Dv50" means that 50% particles have a particle size greater than Dv50 and 50% particles have a particle size smaller than Dv50. "Dv90" means that 90% particles have a particle size smaller than Dv90.

The particle sizes of the first polymer particles, the inorganic particles and the second polymer particles are not specifically limited here, and a particle size range commonly selected in the art may be selected.

The present invention has found through study that in the first coating layer, by designing the particle size ratio of the first polymer particles to the inorganic particles, it is found that at any point value in the range of 0.2 ≤ A/C ≤ 5, and 1 ≤ B/C ≤ 40, heat resistance of the battery separator can be better, adhesion between the battery separator and an electrode plate in a battery cell is better, and the battery cell has excellent low-temperature dynamic performance, so that a battery containing the battery separator has excellent safety performance and cycling performance.

In order to better improve the safety performance and cycling performance of the battery, one or more of the technical features may be further preferred.

Preferably, 0.5 ≤ A/C ≤ 3; and more preferably, 0.8 ≤ A/C ≤ 2.

Preferably, 1.5 ≤ B/C ≤ 15; more preferably, 1.8 ≤ B/C ≤ 10; and most preferably, 2 ≤ B/C ≤ 4.

The first polymer particles and the inorganic particles are dispersed in a first solvent to obtain the first coating layer. After the first coating layer is dried, the first solvent basically volatilizes completely, so that the finally obtained first coating layer does not contain the first solvent or contains a residual trace of the first solvent.

In the first coating layer, a mass ratio of the first polymer particles to the inorganic particles ranges from 0.04:1 to 0.3: 1, for example, it may be, but is not limited to, 0.04:1, 0.05:1, 0.08:1, 0.1:1, 0.15:1, 0.2:1, 0.24:1, 0.25:1, 0.28:1, 0.3:1.

In an example, the mass ratio of the first polymer particles to the inorganic particles ranges from 0.1:1 to 0.2: 1.

In an arbitrary 250 µm × 200 µm region of the first coating layer, the first polymer particles may have a visible quantity of 50-1000, for example, 50, 100, 200, 300, 400, 500, 600, 700, 800, 900, 1000.

In an arbitrary 250 µm × 200 µm region of the first coating layer, the first polymer particles may have a visible quantity of 100-500.

The second polymer particles are dispersed in a second solvent to obtain the second coating layer. After the second coating layer is dried, the second solvent basically volatilizes completely, so that the finally obtained second coating layer does not contain the second solvent or contains a residual trace of the second solvent.

In an arbitrary 250 µm × 200 µm region of the second coating layer, the second polymer particles may have a visible quantity of 50-5000, for example, 50, 100, 200, 500, 1000, 1500, 2000, 2500, 3000, 3500, 4000, 4500, 5000.

In an arbitrary 250 µm × 200 µm region of the second coating layer, the first polymer particles may have a visible quantity of 200-2000.

By controlling a coating amount, the visible quantities of the first polymer particles and the second polymer particles are within the range described above, so that the first coating layer and the second coating layer have better viscosity and dynamic performance. The coating amount is not particularly limited, as long as the visible quantity can be achieved.

The specific selection of the first solvent and the second solvent is not limited, and solvents commonly used in the field for preparing battery separators, such as deionized water, may be selected.

In an example, the Dv10 of the first polymer particles ranges from 0.1 µm to 4 µm, the Dv50 of the first polymer particles ranges from 0.5 µm to 25 µm, and Dv90 of the first polymer particles ranges from 1 µm to 40 µm.

In the first polymer particles, 10% particles have a particle size smaller than or equal to 0.1 µm to 4 µm (inclusive), 50% particles have a particle size of 0.5 µm to 25 µm (inclusive), and 90% particles have a particle size of 1 µm to 40 µm (inclusive).

In an example, Dv10 of the inorganic particles ranges from 0.02 µm to 1 µm, Dv50 of the inorganic particles ranges from 0.05 µm to 6 µm, and the Dv90 of the inorganic particles ranges from 0.3 µm to 10 µm.

In the inorganic particles, 10% particles have a particle size smaller than or equal to 0.02 µm to 1 µm (inclusive), 50% particles have a particle size of 0.05 µm to 6 µm (inclusive), and 90% particles have a particle size of 0.3 µm to 10 µm (inclusive).

In an example, Dv10 of the second polymer particles ranges from 0.1 µm to 1 µm, Dv50 of the second polymer particles ranges from 0.5 µm to 25 µm, and Dv90 of the second polymer particles ranges from 0.6 µm to 40 µm.

In the second polymer particles, 10% particles have a particle size smaller than or equal to 0.1 µm to 1 µm (inclusive), 50% particles have a particle size of 0.1 µm to 4 µm (inclusive), and 90% particles have a particle size of 0.6 µm to 40 µm (inclusive).

By further defining the particle size selection range of the first polymer particles, the inorganic particles and the second polymer particles, an adhesive performance and a thermal shrinkage performance of the battery separator can be better improved.

In an example, the Dv50 of the first polymer particles are greater than or equal to the Dv50 of the second polymer particles.

In an example, the first polymer particles protrude from a surface of the first coating layer.

In an example, a thickness of the first coating layer ranges from 0.5 µm to 10 µm.

For example, the thickness of the first coating layer is 0.5 µm, 1 µm, 1.5 µm, 2 µm, 2.5 µm, 3 µm, 3.5 µm, 4 µm, 4.5 µm, 5 µm, 6 µm, 7 µm, 8 µm, 9 µm, 10 µm.

In this case, the thickness of the first coating layer refers to the thickness from a surface of the substrate coated with the first coating layer to an outer surface of an inorganic particle layer far away from the substrate. Here, the inorganic particle layer refers to the inorganic particles dispersed in the first coating layer and the non-protruding first polymer particles.

In an example, a thickness of the substrate ranges from 3 µm to 20 µm.

For example, the thickness of the substrate is 3 µm, 4 µm, 5 µm, 8 µm, 10 µm, 12 µm, 15 µm, 18 µm, 20 µm.

In an example, in the first coating layer, a coverage rate of the first polymer particles ranges from 10% to 60%.

Here, "the coverage rate of the first polymer particles" means that after the first coating layer is hot-pressed, the first polymer particles are randomly distributed on the surface of the substrate of the separator to form the first coating layer, and a ratio of a distribution area of the first polymer particles to a total area of the first coating layer is the coverage rate of the first polymer particles.

For example, the coverage rate of the first polymer particles may be 10%, 12%, 15%, 20%, 25%, 30%, 35%, 40%, 50%, 60%.

In an example, the coverage rate of the first polymer particles ranges from 15% to 35%.

In an example, in the second coating layer, a coverage rate of the second polymer particles ranges from 20% to 99%.

Here, "the coverage rate of the second polymer particles" means that after the second coating layer is hot-pressed, the second polymer particles are randomly distributed on the surface of the substrate of the separator to form the second coating layer, and a ratio of a distribution area of the second polymer particles to a total area of the second coating layer is the coverage rate of the second polymer particles.

For example, the coverage rate of the second polymer particles may range from 20% to 99%, for example, may be 20%, 25%, 30%, 35%, 40%, 45%, 50%, 60%, 70%, 80%, 90%, 99%.

In an example, the coverage rate of the second polymer particles ranges from 25% to 75%.

By controlling the coverage rate of the first polymer particles in the first coating layer and the coverage rate of the second polymer particles in the second coating layer, and limiting the amounts of the first polymer particles and the second polymer particles from the coverage area ratio, the first coating layer and the second coating layer have better viscosity and dynamic performance, and the performance of the battery separator can be further improved.

In an example, a glass-transition temperature of the first polymer particles ranges from 40°C to 120°C.

The glass-transition temperature of the first polymer particles is closely related to the adhesion of the first coating layer. By limiting the glass-transition temperature of the first polymer particles, problems that the dynamic performance and low-temperature performance of the separator are affected by excessive swelling of the first polymer particles due to the low glass-transition temperature, and problems that the adhesion of the separator is insufficient and the cycling performance of the battery is affected due to the high glass-transition temperature are avoided.

In an example, the first polymer particles are selected from at least one of a homopolymer or a copolymer of an acrylic monomer, a styrene monomer, or an olefin monomer.

For example, the acrylic monomer includes methyl methacrylate, ethyl methacrylate, butyl methacrylate, hydroxyethyl acrylate, acrylamide, ethyl acrylate, butyl acrylate, methacrylic acid, acrylic acid, vinyl acetate, or allyl acetate.

For example, the styrene monomer includes styrene and methylstyrene.

For example, the olefin monomer includes ethylene, propylene, butadiene and acrylonitrile.

For example, the first polymer particles are selected from one or a combination of more of a methyl methacrylate-acrylonitrile-styrene polymer, a methyl methacrylate-ethylene-acrylic acid-acrylonitrile polymer, a methyl methacrylate-vinyl acetate-hydroxyethyl acrylate-acrylonitrile polymer, polymethyl methacrylate, polyethyl methacrylate, polyacrylamide, polyacrylonitrile, polyoxyethylene, a styrene-butadiene polymer, a polyacrylic acid-styrene polymer, or a butadiene-acrylonitrile polyme.

In an example, the inorganic particles are selected from at least one of an inorganic metal oxide, an inorganic metal nitride, or an inorganic metal salt.

For example, the inorganic metal oxide includes boehmite, aluminum oxide, magnesium oxide, calcium oxide, titanium dioxide, silicon dioxide, and zirconium dioxide.

For example, the inorganic metal nitride includes tungsten nitride, silicon carbide, boron nitride, aluminum nitride, titanium nitride, and magnesium nitride.

For example, the inorganic metal salt includes barium sulfate, calcium titanate, and barium titanate.

In an example, a glass-transition temperature of the second polymer particles ranges from 70°C to 130°C.

The glass-transition temperature of the second polymer particles is closely related to the adhesion of the second coating layer. By limiting the glass-transition temperature of the second polymer particles, problems that the dynamic performance and low-temperature performance of the separator are affected by excessive swelling of the second polymer particles due to the low glass-transition temperature, and problems that the adhesion of the separator is insufficient and the cycling performance of the battery is affected due to the high glass-transition temperature are avoided.

In an example, the second polymer particles are selected from at least one of a homopolymer or a copolymer of a fluorinated olefin monomer, an acrylic monomer, or an olefin monomer.

For example, the fluorinated olefin monomer includes vinylidene fluoride, hexafluoropropylene, trifluoroethylene, or tetrafluoroethylene.

For example, the acrylic monomer includes methyl acrylate, methyl methacrylate, ethyl acrylate, butyl acrylate, ethyl methacrylate, styrene, acrylic acid, acrylamide, and methacrylic acid.

For example, the olefin monomer includes butadiene, ethylene, propylene, or acrylonitrile.

For example, the second polymer particles are selected from one or a combination of more of a methyl methacrylate-ethyl acrylate-acrylic polymer, a polyvinylidene fluoride-hexafluoropropylene, or a methyl methacrylate-ethyl acrylate-acrylic polymer.

In an example, the substrate is selected from at least one of polyethylene, polypropylene, multilayer polyethylene-polypropylene, polyethylene-polypropylene blending, polyimide, polyetherimide, polyamide, meta-aramid, para-aramid, or meta-para blended aramid.

Transverse and longitudinal thermal shrinkage of the battery separator provided by the present invention at 130°C is less than or equal to 5%.

The present invention further provides a method for preparing a battery separator, including the following steps.
(1) mixing and dispersing inorganic particles and first polymer particles in a first solvent to obtain a mixed material A;
(2) disposing the mixed material A obtained in the step (1) on one surface of the substrate;
(3) mixing and dispersing second polymer particles in a second solvent to obtain a mixed material B; and
(4) disposing the mixed material B obtained in the step (3) on the other surface of the substrate.

It should be noted that "the other side" in the step (4) refers to a surface in the substrate opposite to the mixed material A, that is, the mixed material A and the mixed material B are respectively disposed on two opposite surfaces of the substrate.

In an example, based on a total mass of the mixed material A, a total mass ratio of the inorganic particles and the first polymer particles ranges from 20% to 40%.

In an example, a solid content of the mixed material B ranges from 5% to 15%.

In an example, the method for preparing the battery separator includes the following steps:
(i) dispersing the inorganic particles and the first polymer particles in the first solvent at a fixed mass ratio to form a stable slurry 1;
(ii) coating the slurry 1 on one surface of the substrate, and then drying to obtain a first coating layer and a semi-finished separator, where a thickness of the first coating layer ranges from 0.5 µm to 10 µm; and
(iii) dispersing the second polymer particles in the second solvent to form a slurry 2, controlling a solid content of the slurry 2 to range from 5% to 15%, and then coating the slurry 2 on the other surface of the semi-finished separator obtained in the step (ii), and then drying to obtain the battery separator.

In the step (i), based on a total mass of the slurry 1, a total mass ratio of the inorganic particles and the first polymer particles ranges from 20% to 40%.

Preferably, in order to ensure stability of the slurry 1, the following first additive may be added: sodium carboxymethyl cellulose, polyvinyl alcohol, or sodium polyacrylate. Preferably, based on the total mass of the slurry 1, a content of the sodium carboxymethyl cellulose ranges from 1 wt % to 3 wt %, a content of the polyvinyl alcohol ranges from 0.2 wt % to 1 wt %, and a content of the sodium polyacrylate ranges from 0.5 wt % to 2 wt %.

In an example, the slurry 2 may also be added with a second additive, and the second additive may be the same as or different from the first additive added to the slurry 1. Preferably, the second additive is the same as the first additive.

The specific selection of the first solvent and the second solvent is not limited, and solvents commonly used in the field for preparing battery separators, such as deionized water, may be selected.

According to a second aspect of the present invention, a battery is provided, and the battery includes the battery separator according to the first aspect of the present invention.

In the present invention, the battery further includes a positive electrode plate, a negative electrode plate, and a non-aqueous electrolyte solution. The battery separator according to the first aspect of the present invention is disposed between the positive electrode plate and the negative electrode plate.

The battery separator provided by the present invention is applied in a battery, and both adhesive strength of the first coating layer and adhesive strength of the second coating layer on the positive electrode or the negative electrode of the battery range from 3 N/m to 50 N/m.

The positive electrode plate includes a positive electrode current collector and a positive electrode active material layer coated on a surface of either or both sides of the positive electrode current collector.

The positive electrode current collector is a substance having conductivity without causing adverse chemical changes in a secondary battery, including but not limited to aluminum, aluminum alloy, nickel, nickel alloy, titanium, or titanium alloy.

The positive electrode active material layer includes a positive electrode active material, a conductive agent, and a binder. There is no particular limitation on the positive electrode active material, and any common positive electrode active material in the art may be used, for example, may be at least one of lithium cobalt oxide, lithium manganate oxide, lithium nickel cobalt aluminum oxide (LiNiₓCo_{y}M_{1-x-y}O₂, where 0 ≤ x, y ≤ 1 and x + y ≤ 1; where M is one or more of Mg, Zn, Ga, Ba, Al, Fe, Cr, Sn, V, Mn, Sc, Ti, Nb, Mo, Zr, Ta, W, B, F, or Si), lithium nickel cobalt aluminum oxide, lithium iron phosphate, a lithium-rich manganese-based material, lithium manganese iron phosphate, or lithium titanate.

The negative electrode plate includes a negative electrode current collector and a negative electrode active material layer coated on a surface of either or both sides of the negative electrode current collector.

For example, the negative electrode current collector is a substance having conductivity without causing adverse chemical changes in a secondary battery, and may be selected from copper, stainless steel, aluminum, nickel, titanium, carbon cloth, or a composite of the material.

The negative electrode active material layer includes a negative electrode active material, a conductive agent, and a binder. The negative electrode active material is selected from at least one of artificial graphite, natural graphite, soft carbon, hard carbon, or a graphite composite material containing 1 wt% to 20 wt% of SiOₓ/C or Si/C, where 0 < x < 2.

Components of the non-aqueous electrolyte solution may include a non-aqueous solvent and a lithium salt. The non-aqueous solvent includes carbonates and/or carboxylates, such as ethylene carbonate, propylene carbonate, propyl propionate, and ethyl propionate. The lithium salt includes lithium hexafluorophosphate (LiPF₆) and/or lithium tetrafluoroborate (LiBF₄).

In addition, the non-aqueous electrolyte solution may also contain an additive, for example, at least one of conventional electrolyte solution additives in the art, such as lithium trifluoromethyl triethylborate, prop-1-ene-1,3-sultone, or fluoroethylene carbonate, may be adopted.

The battery of the present invention has excellent safety performance and cycling performance because the battery contains the battery separator according to the first aspect of the present invention.

In the present invention, when the terms are distinguished by numbers, for example, "first coating layer", "second coating layer", "first solvent", "second solvent", or the like, the numbers in this expression only play a role in distinguishing, but do not represent a sequence, and in the absence of special description, values of the numbers do not bring any limitation to the technical solutions.

The following clearly describes the technical solutions in the embodiments of the present invention with reference to the embodiments of the present invention. Apparently, the described embodiments are some but not all of the embodiments of the present invention. All other embodiments obtained by a person of ordinary skill in the art based on the embodiments of the present invention without creative efforts fall within the protection scope of the present invention.

Materials, reagents and the like used in the following embodiments are all commercially available, unless otherwise specified.

The present invention will be described in detail below with reference to specific embodiments, and these embodiments are used for understanding and not limiting the present invention.

Lithium-ion batteries in the following comparative examples and examples were prepared according to the following method, and a difference lies only in that the difference of the battery separator is specifically shown in Table 1.

### (1) Preparation of a separator

a: Inorganic particles and first polymer particles were dispersed in deionized water to form a stable slurry 1. Preferably, in order to ensure stability of the slurry 1, and additives were added: 2 wt% of sodium carboxymethyl cellulose, 0.5% of polyvinyl alcohol, and 1% of sodium polyacrylate.
   A total mass ratio of the inorganic particles and the first polymer particles was 30%, and the balance was the deionized water and the additive.
b: The slurry 1 was coated on one surface of a polyethylene substrate with a thickness of 5 µm by using a micro-gravure coating process, and then dried at 50°C to obtain a first coating layer and a semi-finished separator. By controlling the mass ratio of the inorganic particles to the first polymer particles and a thickness of the coating layer, a visible number of the first polymer particles in a range of 200 µm × 250 µm could be controlled, and the visual number of the particles determined viscosity and a dynamic performance of the first coating layer.

Second polymer particles were evenly dispersed in deionized water, and additives (2 wt% of sodium carboxymethyl cellulose, 0.5 wt% of polyvinyl alcohol, and 1 wt% of sodium polyacrylate) were added to form a slurry 2 with a solid content of 10%; the slurry 2 was coated on the other surface of the semi-finished separator by using a micro-gravure coating process, a coating amount was controlled, and then the obtained product was dried at 50°C to obtain the battery separator.

A schematic diagram of the battery separator was shown in FIG. 1, where the adhesive used in the second coating layer was not shown.

### (2) Preparation of a positive electrode plate

A positive electrode active material LiCoO₂, a binder polyvinylidene fluoride (PVDF), and a conductive agent acetylene black were mixed at a weight ratio of 96.9:1.5:1.6. N-methylpyrrolidone (NMP) was added. Stirring was performed under action of a vacuum mixer until a mixed system became a positive electrode slurry with uniform fluidity. The positive electrode slurry was evenly applied on an aluminum foil having a thickness of 9 µm to 12 µm. The coated aluminum foil was baked in a five-stage oven with different temperatures, then dried in an oven at 120°C for 8 hours, followed by roll-pressing and cutting, to obtain the required positive electrode plate.

### (3) Preparation of a negative electrode plate

A negative electrode material artificial graphite with a mass percentage of 96.5%, a conductive agent single-walled carbon nanotube (SWCNT) with a mass percentage of 0.1%, a conductive agent conductive carbon black (SP) with a mass percentage of 1%, a binder sodium carboxymethyl cellulose (CMC) with a mass percentage of 1%, and a binder styrene-butadiene rubber (SBR) with a mass percentage of 1.4% were made into a slurry by using a wet process. The slurry was applied on a surface of a negative electrode current collector with copper foil, and then followed by drying (temperature: 85°C, time: 5 hours), rolling, and die cutting to obtain the negative electrode plate.

### (4) Preparation of a non-aqueous electrolyte solution

In an argon-filled glove box (moisture <10 ppm, oxygen <1 ppm), ethylene carbonate (EC), propylene carbonate (PC), propyl propionate (PP), and ethyl propionate (EP) were evenly mixed at a mass ratio of 2:1:5:2, and LiPF₆ accounting for 14 wt% of a total mass of the non-aqueous electrolyte solution and an additive were slowly added into the mixed solution. The mixture was stirred evenly to obtain the non-aqueous electrolyte solution.

### (5) Preparation of a lithium-ion battery

The foregoing prepared positive electrode plate, separator, and negative electrode plate were wound to obtain an unfilled bare cell. The bare cell was placed in an outer packaging foil, the prepared electrolyte solution was injected into the dried bare cell, and after processes such as vacuum packaging, standing, forming, shaping, and sorting, the lithium-ion battery required was obtained.

Methods for testing related performances of the battery separators in the following examples and comparative examples were described as follows.
(1) Particle size distributions of the inorganic particles, the first polymer and the second polymer were tested by using a Markov laser particle size analyzer to obtain Dv10, Dv50 and Dv90.
(2) Glass-transition temperature testing of the first polymer particles and the second polymer particles:
   A universal differential scanning calorimeter (DSC) method was adopted: 5 mg of the first polymer samples prepared in each example and comparative example were respectively taken and heated to 150°C at a heating rate of 5°C/min, DSC curves were collected, and a softening point of the first polymer, i.e., a softening temperature, was determined from the obtained DSC curves.
(3) Visible quantity test of the first polymer particles in 200 µm × 250 µm region:
   A first coating layer surface of the sample separator was placed under a scanning electron microscope and observed at a rate of 50, and an arbitrary 250 µm × 200 µm region was selected to record the visible quantity of the first polymer particles.
(4) Test method for a coverage rate
   When a test object was a separator, the separator was placed at a pressure of 2 MPa and a temperature of 100°C for 10 minutes, after cooling, a first surface and a second surface of the hot-pressed separator were observed by a scanning electron microscope, and a visible occupancy of the polymer particles in each square centimeter area was calculated, which was a coverage rate of the separator.
   When a test object was a lithium battery cell, after the lithium battery cell was discharged, a separator in the battery cell was disassembled, a first surface and a second surface of the disassembled separator were observed by a scanning electron microscope, and a visible occupancy of the polymer particles in each square centimeter area was calculated, which was a coverage rate of the separator.
(5) Adhesion test between a separator and positive and negative electrode plates

National standard GB/T 2790-1995 was adopted, and adhesion between the separator and the positive plate or negative electrode plate was tested by 180° peeling test. The separator and the positive electrode plate or the negative electrode plate was stacked together, and then the separator and the positive electrode plate or the negative electrode plate was compounded by hot pressing with a hot press. The hot pressing was carried out at a temperature ranging from 88°C to 90°C, a pressure of 1.2 Mpa, and a hot pressing time ranging from 60 seconds to 120 seconds. After hot pressing, the sample was cut into strips of 15 mm×50 mm, and the adhesion between the separator and the positive electrode plate or the negative electrode plate was tested.

**Table 1**

| Example | First polymer | | | | | Inorganic particle | | | | A/C | B/C | Second polymer | | | | |
|---|---|---|---|---|---|---|---|---|---|---|---|---|---|---|---|---|
| | Component | Dv10 A | Dv50 B | Dv9 0 | Coverage rate% | Component | Dv10 | Dv50 | Dv90 C | | | Component | Dv10 | Dv50 | Dv90 | Cove -rage rate% |
| Example 1 | Poly(methyl methacrylate -acrylonitrile -styrene) | 1.8 | 5.2 | 10.4 | 24.60 | Aluminum oxide | 0.32 | 0.74 | 2.2 | 0.82 | 2.36 | Poly(methyl methacrylate-ethyl acrylate-acrylic polymer) | 0.34 | 0.6 | 0.84 | 57.20 |
| Example 2 | Poly(methyl methacrylate -ethylene-acrylic acid-acrylonitrile) | 2.7 | 5.8 | 13.5 | 23.70 | Boehmite | 0.42 | 1.13 | 2.5 | 1.08 | 2.32 | Polyvinylidene fluoridehexafluoroprop ylene | 0.26 | 0.39 | 0.58 | 55.40 |
| Example 3 | Poly(methyl methacrylate -vinyl acetate-hydroxyethyl acrylate-acrylonitrile) | 3.4 | 6.7 | 15.2 | 25.80 | Magnesium oxide | 0.37 | 0.94 | 1.8 | 1.89 | 3.72 | Poly(methyl methacrylate-ethylene-acrylic acid-acrylonitrile) | 0.34 | 0.6 | 0.84 | 56.34 |
| Example 4 | Same as that in Example 1 | 2.7 | 5.2 | 10.4 | 24.90 | Aluminum oxide | 0.25 | 0.56 | 1.2 | 2.25 | 4.33 | Same as that in Example 1 | 0.34 | 0.6 | 0.84 | 57.30 |
| Example 5 | Same as that in Example 1 | 1.9 | 6.1 | 11.6 | 25.10 | Aluminum oxide | 0.37 | 0.89 | 3.3 | 0.58 | 1.85 | Same as that in Example 1 | 0.34 | 0.6 | 0.84 | 57.40 |
| Example 6 | Same as that in Example 1 | 2.1 | 3.3 | 8.5 | 23.80 | Aluminum oxide | 0.32 | 0.74 | 2.2 | 0.95 | 1.5 | Same as that in Example 1 | 0.34 | 0.6 | 0.84 | 57.00 |
| Example 7 | Same as that in Example 1 | 2.1 | 5.2 | 10.4 | 50.2% | Aluminum oxide | 0.32 | 0.74 | 2.2 | 0.95 | 2.36 | Same as that in Example 1 | 0.34 | 0.6 | 0.84 | 56.90 |
| Example 8 | Same as that in Example 1 | 2.1 | 5.2 | 10.4 | 38.11 | Aluminum oxide | 0.32 | 0.74 | 2.2 | 0.95 | 2.36 | Same as that in Example 1 | 0.34 | 0.6 | 0.84 | 57.30 |
| Example 9 | Same as that in Example 1 | 2.1 | 5.2 | 10.4 | 24.80 | Aluminum oxide | 0.32 | 0.74 | 2.2 | 0.95 | 2.36 | Same as that in Example 1 | 0.34 | 0.6 | 0.84 | 78.13 |
| Example 10 | Same as that in Example 1 | 2.1 | 5.2 | 10.4 | 24.30 | Aluminum oxide | 0.32 | 0.74 | 2.2 | 0.95 | 2.36 | Same as that in Example 1 | 0.34 | 0.6 | 0.84 | 23.30 |
| Comparative Example 1 | Same as that in Example 1 | 0.4 | 1.8 | 5.1 | 25.10 | Aluminum oxide | 0.32 | 0.74 | 2.2 | 0.18 | 0.82 | Same as that in Example 1 | 0.34 | 0.6 | 0.84 | 57.40 |
| Comparative Example 2 | Same as that in Example 1 | 2.7 | 5.2 | 10.4 | 9.3 | Aluminum oxide | 0.37 | 0.94 | 2.5 | 1.08 | 2.08 | Same as that in Example 1 | 0.34 | 0.6 | 0.84 | 56.80 |
| Comparative Example 3 | Same as that in Example 1 | 2.1 | 5.2 | 10.4 | 76.80 | Aluminum oxide | 0.32 | 0.74 | 2.2 | 0.95 | 2.36 | Same as that in Example 1 | 0.34 | 0.6 | 0.84 | 57.20 |
| Comparative Example 4 | / | / | / | / | | Aluminum oxide | 0.37 | 0.94 | 1.8 | 0 | 0 | Same as that in Example 1 | 0.34 | 0.6 | 0.84 | 57.50 |
| Comparative Example 5 | Same as that in Example 1 | 2.1 | 5.2 | 10.4 | 24.50 | Aluminum oxide | 0.32 | 0.74 | 2.2 | 0.95 | 2.36 | Same as that in Example 1 | 0.34 | 0.6 | 0.84 | 11.70 |

The lithium-ion batteries obtained in the above examples and comparative examples were tested for electrochemical performance.
(1) 25°C cycling test: The batteries obtained in the above examples and comparative examples were placed in an environment of (25±2)°C to stand for 2 to 3 hours. When the battery bodies reached (25±2)°C, the batteries were charged at a constant current of 1C, with a cut-off current of 0.05C. After the batteries were fully charged, the batteries were left aside for 5 minutes, and then discharged at a constant current of 0.5C to a cut-off voltage of 3.0 V. A highest discharge capacity for the first three cycles was recorded as an initial capacity Q. When the number of cycles reached the required number of times, the last discharge capacity of the battery was recorded as Q1. Recorded results are shown in Table 2.

The calculation formula used is as follows: Capacity retention rate (%) = Q1/Q × 100%.
(1) 45°C cycling test: The batteries obtained in the above examples and comparative examples were placed in an environment of (45±2)°C to stand for 2 to 3 hours. When the battery bodies reached (45±2)°C, the batteries were charged at a constant current of 1C, with a cut-off current of 0.05C. After the batteries were fully charged, the batteries were left aside for 5 minutes, and then discharged at a constant current of 0.5C to a cut-off voltage of 3.0 V. A highest discharge capacity for the first three cycles was recorded as an initial capacity Q. When the number of cycles reached the required number of times, the last discharge capacity of the battery was recorded as Q1. Recorded results are shown in Table 2.
   The calculation formula used is as follows: Capacity retention rate (%) = Q₁/Q × 100%.
(2) Low temperature discharge test: The batteries obtained in the above examples and comparative examples were first discharged at 0.2C to 3.0 V at an ambient temperature of (25±3)°C, and left aside for 5 minutes. The batteries were charged at 0.7C, and when a voltage at the cell terminals reached a charging limit voltage, the batteries began to be charged at a constant voltage. The charging was not stopped until a charging current was less than or equal to a cut-off current. The batteries were left aside for 5 minutes and then discharged at 0.2C to 3.0 V, and a discharge capacity in this case was recorded as a normal-temperature capacity Q2. The cells were charged at 0.7C, and when a voltage at the cell terminals reached a charging limit voltage, the cells began to be charged at a constant voltage. The charging was not stopped until a charging current was less than or equal to a cut-off current. The fully charged batteries were left aside at (-10±2)°C for 4 hours, and then discharged at a current of 0.5C to a cut-off voltage of 3.0 V. A discharge capacity Q3 was recorded to calculate a low-temperature discharge capacity retention rate. Recorded results are shown in Table 2.
   Battery low-temperature discharge capacity retention rate (%) = Q3/Q2 × 100%.
(3) Thermal shock test at 135°C: the lithium-ion batteries obtained in the above examples and comparative examples were fully charged at room temperature, and then tested within 24 hours. The batteries were heated in a convection mode or by using a circulating hot air box at a start temperature of (25±3)°C, with a temperature change rate of (5±2)°C/min. The temperature was raised to (135±2)°C, the batteries were kept at the temperature for 60 minutes, and then the test ended. Recorded status results of the batteries are shown in Table 2.
   Those batteries with no fire, explosion, and combustion were considered to be passed, and the remaining batteries were considered to be not passed.
(4) Overcharge test: The batteries obtained in the above examples and comparative examples were charged at a rate of 3C and a constant current to 5 V. A battery status was recorded. Recorded results are shown in Table 2. Those batteries with no fire, explosion, and combustion were considered to be passed, and the remaining batteries were considered to be not passed.
(5) 25°C charge temperature rise test: the lithium-ion batteries obtained in the above examples and comparative examples were discharged to 3.0 V at a rate of 0.2C, then charged to a limit voltage at 1.0C at 25°C after standing for 2 hours, and the temperature rise of the tested cells was sampled after the batteries were tested for 5 seconds.

**Table 2**

| Example | Adhesion of the first coating layer to the positive electrode | Adhesion of the second coating layer to the positive electrode | Capacity retention rate after 600 cycles at 25°C and 1C | Capacity retention rate after 400 cycles at 45 °C and 1C | Capacity retention rate after discharge at -10°C and 0.2C | Therma l shock for 60 minutes at 135 °C | 25 °C charge temperature rise |
|---|---|---|---|---|---|---|---|
| Example 1 | 11.3 | 19.5 | 90.75% | 86.59% | 90.15% | 5/5 | 46.8 °C |
| Example 2 | 14.5 | 18.6 | 91.38% | 86.95% | 90.36% | 5/5 | 47.1 °C |
| Example 3 | 16.8 | 19.9 | 91.45% | 87.26% | 90.53% | 5/5 | 47.0 °C |
| Example 4 | 10.8 | 19.3 | 89.53% | 85.31% | 89.92% | 5/5 | 48.0 °C |
| Example 5 | 11.1 | 19.6 | 89.12% | 84.96% | 89.47% | 5/5 | 48.1 °C |
| Example 6 | 10.0 | 19.5 | 89.32% | 85.02% | 89.25% | 5/5 | 48.5 °C |
| Example 7 | 4.9 | 19.6 | 90.36% | 85.96% | 90.32% | 5/5 | 47.5 °C |
| Example 8 | 17.6 | 19.7 | 88.92% | 84.31% | 89.36% | 5/5 | 48.1 °C |
| Example 9 | 11.5 | 19.6 | 88.49% | 84.13% | 89.26% | 5/5 | 48.3 °C |
| Example 10 | 11.2 | 6.3 | 87.23% | 83.27% | 89.05% | 5/5 | 52.1 °C |
| Comparative Example 1 | 0.7 | 19.6 | 82.35% | 76.92% | 77.29% | 4/5 | 57.3 °C |
| Comparative Example 2 | 1.3 | 19.6 | 83.46% | 77.25% | 76.38% | 4/5 | 62.5 °C |
| Comparative Example 3 | 62 | 19.6 | 73.12% | 63.47% | 70.32% | 0/5 | 75.1 °C |
| Comparative Example 4 | 0 | 8.2 | 63.48% | 58.73% | 72.15% | 4/5 | 59 °C |
| Comparative Example 5 | 18.5 | 2.4 | 75.32% | 69.24% | 74.58% | 2/5 | 45.8 °C |

It can be seen from the results of Table 2 that the first coating layer can obtain excellent adhesion with the positive electrode of the battery by controlling the appropriate particle size ratio of the first polymer particles and the inorganic particles, the second coating layer controls the coating amount of the second polymer particles to obtain excellent adhesion with the negative electrode, and in an appropriate range, the battery cell has excellent normal temperature and 45°C cycling performance, and has excellent discharge performance at a low temperature of -10°C at the same time. The battery separator of the present invention has good lithium ion transmission capability, overall direct current and alternating current impedance of the battery cell is low, and the charging temperature rise at 25°C is low.

It can be found that through the comparative examples that, although the excess first polymer particles and the second polymer particles can make the battery separator have excellent adhesion to the positive and negative electrodes, the swelling of the polymer particles is too large, which seriously affects the transmission capability of the lithium ions, and the cycling and low-temperature discharge of the battery cell are significantly affected. The first polymer particles and the inorganic ions form the first coating layer, the proper amount of the first polymer particles do not affect the overall heat resistance of the separator, and the safety performance of the battery cell is basically not affected, but excessive first polymer particles have a great influence on the thermal resistance shrinkage of the separator at 130°C, which affects the safety of the battery cell to a certain extent, such as the test results of the thermal shock test at 135°C.

The above are only preferred embodiments of the present invention and are not intended to limit the present invention. Any modification, equivalent replacement, or the like made without departing from the principle of the present invention shall fall within the protection scope of the present invention.

## Claims

1. A battery separator, **characterized in that** the battery separator comprises a substrate, a first coating and a second coating, and the first coating and the second coating are arranged opposite to one another on two sides of the substrate;
the first coating comprises first polymer particles and inorganic particles;
the second coating comprises second polymer particles;
Dv10 of the first polymer particles is denoted as A, and Dv50 of the first polymer particles is denoted as B; and Dv90 of the inorganic particles is denoted as C; wherein A, B and C satisfy a relationship that 0.2 ≤ A/C ≤ 5; and 1 ≤ B/C ≤ 40.

2. The battery separator according to claim 1, **characterized in that** A, B and C satisfy the relationship that 0.2 ≤ A/C ≤ 3; and 1.5 ≤ B/C ≤ 15; and
preferably, A, B and C satisfy the relationship that 0.8 ≤ A/C ≤ 2; and 1.8 ≤ B/C ≤ 10.

3. The battery separator according to claim 1 or 2, **characterized in that**, in an arbitrary 250 µm × 200 µm region of the first coating, the first polymer particles have a visible quantity of 50-1000; and/or
in an arbitrary 250 µm × 200 µm region of the second coating, the second polymer particles have a visible number of 50-5000.

4. The battery separator according to any one of claims 1 to 3, **characterized in that**, in the first coating, a mass ratio of the first polymer particles to the inorganic particles ranges from 0.04: 1 to 0.3:1, and preferably, 0.1: 1 to 0.2:1.

5. The battery separator according to any one of claims 1 to 4, **characterized in that** the Dv10 of the first polymer particles ranges from 0.1 µm to 4 µm, the Dv50 of the first polymer particles ranges from 0.5 µm to 25 µm, and Dv90 of the first polymer particles ranges from 1 µm to 40 µm; and/or,
Dv10 of the inorganic particles ranges from 0.02 µm to 1 µm, Dv50 of the inorganic particles ranges from 0.05 µm to 6 µm, and the Dv90 of the inorganic particles ranges from 0.3 µm to 10 µm; and/or,
Dv10 of the second polymer particles ranges from 0.1 µm to 1 µm, Dv50 of the second polymer particles ranges from 0.5 µm to 25 µm, and Dv90 of the second polymer particles ranges from 0.6 µm to 40 µm; and/or,
the Dv50 of the first polymer particles are greater than or equal to the Dv50 of the second polymer particles.

6. The battery separator according to any one of claims 1 to 5, **characterized in that** the first polymer particles protrude from a surface of the first coating; and/or,
a thickness of the first coating ranges from 0.5 µm to 10 µm; and/or,
a thickness of the substrate ranges from 3 µm to 20 µm.

7. The battery separator according to any one of claims 1 to 6, **characterized in that** in the first coating, a coverage rate of the first polymer particles ranges from 10% to 60%, and preferably 15% to 35%; and/or,
in the second coating, a coverage rate of the second polymer particles ranges from 20% to 99%, and preferably 25% to 75%.

8. The battery separator according to any one of claims 1 to 7, **characterized in that** a glass-transition temperature of the first polymer particles ranges from 40°C to 120°C; and/or,
a glass-transition temperature of the second polymer particles ranges from 70°C to 130°C.

9. The battery separator according to any one of claims 1 to 8, **characterized in that** the first polymer particles are selected from at least one of a homopolymer or a copolymer of an acrylic monomer, a styrene monomer, or an olefin monomer; and/or
the inorganic particles are selected from at least one of an inorganic metal oxide, an inorganic metal nitride, or an inorganic metal salt; and/or,
the substrate is selected from at least one of polyethylene, polypropylene, multilayer polyethylene-polypropylene, polyethylene-polypropylene blending, polyimide, polyetherimide, polyamide, meta-aramid, para-aramid, or meta-para blended aramid.

10. The battery separator according to claim 9, **characterized in that** the first polymer particles are selected from one or a combination of more of a methyl methacrylate-acrylonitrile-styrene polymer, a methyl methacrylate-ethylene-acrylic acid-acrylonitrile polymer, a methyl methacrylate-vinyl acetate-hydroxyethyl acrylate-acrylonitrile polymer, polymethyl methacrylate, polyethyl methacrylate, polyacrylamide, polyacrylonitrile, polyoxyethylene, a styrene-butadiene polymer, a polyacrylic acid-styrene polymer, or a butadiene-acrylonitrile polymer; and/or
the inorganic particles are selected from a combination of one or more of boehmite, aluminum oxide, magnesium oxide, calcium oxide, magnesium hydroxide, titanium dioxide, silicon dioxide, or zirconium dioxide.

11. The battery separator according to any one of claims 1 to 10, **characterized in that** the second polymer particles are selected from at least one of a homopolymer or a copolymer of a fluorinated olefin monomer, an acrylic monomer, or an olefin monomer; and
preferably, the second polymer particles are selected from one or a combination of more of a methyl methacrylate-ethyl acrylate-acrylic polymer, a polyvinylidene fluoride-hexafluoropropylene, or a methyl methacrylate-ethyl acrylate-acrylic polymer.

12. The battery separator according to any one of claims 1 to 11, **characterized in that** the first coating further comprises a first additive; and/or, the second coating further comprises a second additive; and
preferably, the first additive and the second additive are independently selected from one or a combination of more of sodium carboxymethyl cellulose, polyvinyl alcohol, or sodium polyacrylate.

13. A method for preparing the battery separator according to any one of claims 1 to 12, **characterized by** comprising the following steps:
(1) mixing and dispersing inorganic particles and first polymer particles in a first solvent to obtain a mixed material A;
(2) disposing the mixed material A obtained in the step (1) on one surface of the substrate;
(3) mixing and dispersing second polymer particles in a second solvent to obtain a mixed material B; and
(4) disposing the mixed material B obtained in the step (3) on the other surface of the substrate.

14. The method according to claim 13, **characterized in that**, based on a total mass of the mixed material A, a total mass ratio of the inorganic particles to the first polymer particles ranges from 20% to 40%; and/or,
a solid content of the mixed material B ranges from 5% to 15%.

15. A battery, **characterized by** comprising the battery separator according to any one of claims 1 to 14.
